# EUROPÄISCHE PATENTSCHRIFT

(11) **EP 4 355 454 B1**
(45) Veröffentlichungstag und Bekanntmachung des Hinweises auf die Patenterteilung: **11.11.2026**
(21) Anmeldenummer: 22785724.0
(22) Anmeldetag: 19.09.2022
(51) Int. Cl.: B01D 24/00, B01D 29/11, B01D 29/58, B01D 46/24, B01D 46/30, B01D 46/64

(54) **FILTERVORRICHTUNG**
FILTER APPARATUS
APPAREIL DE FILTRATION

(30) Priorität: 21.09.2021 DE 102021004750
(43) Veröffentlichungstag der Anmeldung: 24.04.2024
(73) Patentinhaber: Hydac Process Technology GmbH, 66538 Neunkirchen (DE)
(72) Erfinder: SCHLICHTER, Bernhard, 66123 Saarbrücken (DE); GERSTNER, Jörg Hermann, 66346 Püttlingen (DE); DEUTSCHMEYER, Manfred, 66706 Perl (DE); BUGROV, Dimitri, 66646 Marpingen (DE)
(74) Vertreter: Bartels und Partner, Patentanwälte
(86) Internationale Anmeldenummer: PCT/EP2022/075944
(87) Internationale Veröffentlichungsnummer: WO 2023/046626

(56) Entgegenhaltungen:
- DE-A1- 3 943 249
- DE-B- 1 083 466
- US-A- 3 252 270
- US-A- 5 015 375

## Beschreibung

Die Erfindung betrifft eine Filtervorrichtung, insbesondere in Form eines ein Filtermaterial aufweisenden Hohlzylinders, mit den Merkmalen des Oberbegriffes des Patentanspruches 1.

Durch DE 10 2019 006 765 A1 ist ein Verfahren zum Herstellen eines mehrlagigen Filtermediums sowie ein nach diesem Verfahren hergestelltes Filtermedium bekannt, wobei das Verfahren mindestens die folgenden Herstellschritte aufweist:
- Bereitstellen einer Gewebelage, die Durchlassstellen für Fluid aufweist;
- Bereitstellen einer aus einem Spinnvlies bestehenden Vlieslage, die
- weitere Durchlassstellen für Fluid aufweist; und
- Verbinden der beiden aufeinandergelegten Lagen entlang von Kontaktstellen durch Aufschmelzen der Vlieslage derart, dass das aufgeschmolzene Spinnvliesmaterial unter Vergrößerung der weiteren Durchlassstellen zumindest teilweise zu den Kontaktstellen läuft und an diesen kumuliert anschließend aushärtend feste Verbindungsstellen zwischen den beiden Lagen erzeugt werden.

Im Gegensatz zu sonst bekannten Filtermedienlösungen unter Einbezug des Versinterns von Drahtgeweben miteinander, erfolgt die mechanische Stabilisierung durch Einsatz eines Schmelzvlieses als der Vlieslage. Dabei wird das Flächengewicht des Schmelzvlieses derart gewählt und der thermische Schmelzklebeprozess derart durchgeführt, dass zwischen den zu verbindenden Drahtgeweben durch das Schmelzvlies ein Zwischenraum mit hoher Porosität entsteht. Die mit dem genannten Filtermedium hergestellten Filterelemente sind als Rückspülelemente, insbesondere für den Einsatz in Rückspülfiltervorrichtungen vorgesehen, wie sie beispielhaft in DE 10 2017 002 646 A1, DE 10 2017 001 970 A1 und DE 10 2019 003 932 A1 aufgezeigt sind.

Die angesprochenen Filterelemente eignen sich besonders zur Fest-Flüssig-Trennung von niedrigviskosen Fluiden und sind in der Wasserfiltration von Bedeutung. Bei fortlaufender Filtration werden jedoch zusehends die Filterporen des Filtermaterials von den Schmutzpartikeln bedeckt und derart verschlossen, was fachsprachlich auch mit Verblocken bezeichnet wird. Mit zunehmender Schmutzaufnahme steigt dann zwangsläufig der Differenzdruck gemessen vor und hinter dem Filtermaterial entsprechend schnell an und die Filtervorrichtung leitet bei einem bestimmten Differenzdruck die vorstehend beschriebene Rückspülung ein. Je geringer die Schmutzaufnahmefähigkeit des Filtermaterials ist und je häufiger es zum Verblocken kommt, muss das Filtermaterial durch Strömungsumkehr gereinigt werden bevor es für die Filtration wieder nutzbar wird. Umso kürzer aber die Filtrationsintervalle der Vorrichtung werden, umso häufiger wird pro Zeiteinheit rückgespült, was zum einen mehr Rückspülflüssigkeit erzeugt, regelmäßig in Form von Abwasser, und je nach Schmutzgehalt im Wasser wird ein entsprechend großer Rückspülfilter für eine wirksame Regeneration benötigt.

US 5,015,375 A offenbart eine Filtervorrichtung, insbesondere für die Filtration von Lösungsmittel für die chemische Reinigung, die zusammengesetzt ist aus einem plissierten Papierelement, das auf seiner Innenseite als weiteres Filtermedium neben dem Papier mit körniger Aktivkohle versehen ist.

DE 39 43 249 A1 offenbart ein regenerierbares Tiefbettfilter-Element mit mindestens einer hohlzylindrischen Kammer, in der jeweils eine Schüttgut-Füllung aus regenerierbaren filtrationsaktiven Stoffen aufgenommen ist. Durch Rückspülen mit Wasser, Dampf, chemischen Reinigungsmitteln kann dieser dichte, poröse Tiefbettfilter bedarfsweise regeneriert werden.

DE 10 83 466 B offenbart ein Verfahren nebst Vorrichtung zur Filterung von Dieselkraftstoff unter Verwendung von chemisch aktiven Filtermitteln, wobei ein Filter vorgesehen ist, bei welchem ein großflächiger Papierfilterkörper den Träger des ihn zylindrisch umgebenden, chemisch aktiven Filters bildet.

US 3,252,270 A offenbart eine Filtervorrichtung, bei der in Durchströmungsrichtung von außen nach innen gesehen zwecks Abreinigen von Öl aus einem Kompressorluftstrom als Vorfilter ein Sorptionsmittel durchströmt wird und anschließend ein mikroporöser Filter, beispielsweise gebildet aus einer plissierten Papierbahn, die relativ großporig zur Verringerung ihrer Porengröße mit Zusatzmaterialien versehen wird.

Ausgehend von diesem Stand der Technik liegt der Erfindung die Aufgabe zugrunde, die bekannten Filterlösungen dahingehend weiter zu verbessern, dass die vorstehend beschriebenen Nachteile vermieden sind.

Eine solche Aufgabe löst eine Filtervorrichtung mit Merkmalen des Patentanspruches 1 in seiner Gesamtheit.

Gemäß dem kennzeichnenden Teil des Patentanspruches 1 ist vorgesehen, dass zur Vervollständigung des Hohlzylinders das angesprochene Filtermaterial an seinen freien Stirnseiten jeweils von einer ringförmigen Endkappe eingefasst ist, die mit einem Vorsprung den oberen Endbereich aller Einzellagen des Filterzylinders übergreift und auf ihrer einem äußeren Stützkörper des Hohlzylinders zugewandten Seite zwei umlaufende Nuten aufweist, die durch einen Mittensteg voneinander separiert sind, und dass auf der Innenumfangsseite die jeweilige ringförmige Endkappe bündig mit der Innenumfangsseite des inneren Stützkörpers des Hohlzylinders abschließt und auf der gegenüberliegenden Seite in einer Ringnut der ringförmigen Endkappe ein O-Dichtring aufgenommen ist.

Dadurch, dass einem Oberflächenfilter in Strömungsrichtung eines von partikulärer Verschmutzung abzureinigenden Fluidstroms ein Vorfilter vorgeschaltet ist, der zur Vergrößerung der wirksamen Oberfläche des Filters ein Schüttgut aufweist, das zwischen Begrenzungslagen aufgenommen ist, die jeweils mit Fluiddurchlässen versehen sind, deren Öffnungsweite kleiner ist als der Durchmesser eines einzelnen Kornes des Schüttguts, ist die Schmutzaufnahmefähigkeit der Filtervorrichtung respektive des Filterelementes in der Weise gesteigert, dass die Filtrationsintervalle im Vergleich zu konventionellen Elementaufbauten, wie vorstehend beschrieben, bei sonst gleichen Prozessbedingungen deutlich länger werden.

Das durch die Schüttung erzeugte zusätzliche Porenvolumen vor dem eigentlichen Filtermaterial des Oberflächenfilters erhöht die Schmutzaufnahmefähigkeit des Gesamtfilters entsprechend, so dass der für die Auslösung der Rückspülung erforderliche Differenzdruck vergleichsweise später erreicht wird. Da die Schüttung, die unter anderem zu der Filterfeinheit des Gesamtfilters mit beiträgt, einen zusätzlichen Widerstand für die Partikelfiltration darstellt, liegt zwar der Anfangsdifferenzdruck im Vergleich zu konventionellen Filtervorrichtungen mit Filterzylinder etwas höher. Demgegenüber dauert es jedoch deutlich länger bis der Differenzdruck derart ansteigt, dass die Rückspülung oder Regeneration ausgelöst wird. Insgesamt wird die Filterfeinheit des Gesamtfilters letztlich durch das Feingewebe eines Filters bestimmt. Daher wird das eingesetzte Gewebematerial auch entsprechend feiner gewählt als die Schüttung in Form des Schüttguts.

Insgesamt wird jedoch die Leistungsdichte bei gleicher Apparate- oder Vorrichtungsgröße erhöht, das heißt die Vorrichtung kann vergleichsweise größere Volumenströme behandeln. Des Weiteren wird die Filtratqualität verbessert. Obwohl ein im Rahmen des Oberflächenfilters eingesetztes Feinfiltergewebe theoretisch feinere geometrische Poren als die davor gelagerte Schüttung aufweisen kann, zeigen vergleichende Untersuchungen zu einem konventionellen Filterzylinder mit gleichem Feingewebe bei der erfindungsgemäßen Lösung höhere Rückhalteraten. Es kann davon ausgegangen werden, dass im Falle des Filterzylinders mit Schüttung die Rückhaltung partikulärer Verunreinigungen nun nicht mehr nur auf Größenausschluss-Mechanismen oder Siebeffekte zurückzuführen ist, sondern zunehmend auch adsorptive Vorgänge von Bedeutung sind. In jedem Fall ist der Vorfilter in Form der Schüttung zwischen Begrenzungslagen aufgenommen, die zumindest auf einer Seite auch Bestandteil des Oberflächenfilters sein können, mit Öffnungsweiten, die einen ungewollten Austritt des kornförmigen Schüttguts aus der Vorfilterlage verhindern. Dergestalt ist auch bei einem hochdynamischen Filtrations- und Rückspülbetrieb der Verbleib der Schüttung in dem dem Oberflächenfilter vorgeschalteten Vorfilter garantiert.

Vorzugsweise bilden dabei die beiden Begrenzungslagen eine dünne Zylinderwand des Hohlzylinders aus, deren Breite 2 bis 6%, bevorzugt 2,5%, des freien Durchmessers des Hohlzylinders beträgt. Dergestalt sind alle aktiven Filtermedien in der dünnen Zylinderwand zusammengefasst, so dass das Innere des Hohlzylinders weitgehend als hindernisfreier Durchströmungsraum zur Verfügung steht, so dass ein hoher Durchsatz an Volumenstrom erreicht ist und es werden bewusst keine hohen Verweilzeiten des Fluidstroms im Filtermedium angestrebt, wie dass bei bekannten Filtern der Fall ist, wenn mehr oder minder der gesamte Innenraum des Hohlzylinders mit dem jeweiligen Filtermedium, auch in schüttfähiger Form, angefüllt ist.

Dergestalt ist mit der erfindungsgemäßen Filtervorrichtung eine äußerst effektive Oberflächenfilterlösung erreicht, die sich darüber hinaus zwecks Abreinigen des Filtermediums in entgegengesetzter Richtung auch sehr gut rückspülen lässt. Dies hat so keine Entsprechung im Stand der Technik.

Bei einer bevorzugten Ausführungsform der erfindungsgemäßen Filtervorrichtung ist vorgesehen, dass das Schüttgut aus anorganischen, metallischen oder organischen Materialien natürlichen oder synthetischen Ursprungs besteht. Insbesondere können hier auch recycelte Materialien zum Einsatz kommen, wie beispielsweise Glasscherben aus Altglas und dergleichen mehr. Auf diese Art und Weise lässt sich CO₂ einsparen und klimaneutral die Schüttung aus Altmaterialien erhalten.

Vorzugsweise ist dabei ferner vorgesehen, dass die Korngröße für das einzelne Korn zwischen 0,1 mm bis 2 mm liegt mit einer Schütthöhe des Schüttguts zwischen den beiden Begrenzungslagen des Filters, die zwischen 5 bis 50 mm, vorzugsweise zwischen 10 bis 30 mm liegt. Dergestalt ist ein Optimum erreicht, betreffend die Partikelrückhaltung, ohne dass der Durchflusswiderstand für das strömende Fluid durch die Schüttung nachteilig beeinträchtigt wäre.

Das Schüttgut kann dabei vorzugsweise hydrophobiert sein und/oder hydrophobierte Materialien aufweisen, was den Vorteil hat, dass nicht ungewollt in Fluiden, beispielsweise in Hydraulikölen mitgeführtes Wasser, sich im Schüttgut einlagern kann und die weitere Filtration beeinträchtigt. Bevorzugt ist dabei das Schüttgut aus Sand, Silikaten, Metallen, Glas, Aktivkohle(n) und/oder Kunststoffen in Kornform aufgebaut.

Bei einer weiteren bevorzugten Ausführungsform der erfindungsgemäßen Filtervorrichtung ist vorgesehen, dass die Begrenzungslagen des Filters und/oder der Oberflächenfilter aus Draht- oder Kunststoffgeweben oder geeigneten Vliesen gebildet sind. Dergestalt lassen sich Draht- oder Kunststoffgewebe mit unterschiedlichsten Bindungen herstellen, die korrosionsbeständig sind. Neben den üblichen Geweben aus Kett- und Schussfäden lassen sich auch dergestalt Tressengewebe verwenden.

Bei einer bevorzugten Ausführungsform der erfindungsgemäßen Filtervorrichtung ist vorgesehen, dass der Oberflächenfilter eine Begrenzungslage für das Schüttgut aufweist oder diese Begrenzungslage selbst bildet. Des Weiteren weist vorzugsweise der Filterzylinder von innen nach außen die folgenden Komponenten auf:
- einen inneren Stützkörper,
- eine Begrenzungslage zum Begrenzen des Schüttguts,
- Schüttgut zur Vergrößerung der Oberfläche des Oberflächenfilters,
- optional eine weitere Begrenzungslage,
- einen Oberflächenfilter,
- ein Stützgewebe zum Stützen des Oberflächenfilters,
- einen äußeren Stützkörper.

Die weitere Begrenzungslage kann optional vorhanden sein, da das nachfolgende Feingewebe, welches als Oberflächenfilter mit fungiert und die Filterfeinheit des Gesamtfilters bestimmt, die Schüttung zurückhalten kann. Das Stützgewebe zum Stützen des Oberflächenfilters ist quasi zwingend, um das Feingewebe auf dem nachfolgenden Stützkörper abstützen zu können. Das Oberflächenfiltermaterial kann dabei aus unterschiedlichsten Materialien (anorganisch/keramisch, organisch oder metallisch) aufgebaut sein, vorzugsweise als Gewebe oder Vlies bestehend aus Edelstahl oder Kunststoff. Bevorzugt ist die Filterfeinheit für das Oberflächenmaterial geringer gewählt als die durchschnittlich sich ergebende geometrische Pore der Schüttung, die die Filterfeinheit für den gesamten Filterzylinder mitbestimmt. So können für das Oberflächenfiltermaterial Edelstahlfeingewebe unterschiedlichster Bindungen zum Einsatz kommen, beispielsweise in Quadratmaschen- oder Tressenausführung; typischerweise mit geometrischen Poren im Bereich von 1 bis 100 *µ*m, vorzugsweise im Bereich von 10 bis 50*µ*m.

Bei einer weiteren besonders bevorzugten Ausführungsform der erfindungsgemäßen Filtervorrichtung ist vorgesehen, dass der innere und/oder der äußere Stützkörper aus einem perforierten Blech, einem Spaltsieb oder einem Drahtgitter gebildet sind. Vorzugsweise ist dabei ferner vorgesehen, dass der äußere Stützkörper einen nach außen zur Umgebung hin vorstehenden, umlaufenden spiralförmigen Draht aufweist. Die dahingehende Anordnung dient insgesamt dem Stabilisieren des Filterkörpers, insbesondere gegen Berstdruck. Bevorzugt kann der jeweilige Stützkörper mit den den Filterzylinder begrenzenden Endkappen verbunden, insbesondere verklebt, sein. Die Klebung ist insofern von Vorteil, um letzte Lufteinschlüsse in der Schüttung zu vermeiden und auch eine Abdichtung über alle Lagen abzusichern.

Im Folgenden wird die erfindungsgemäße Filtervorrichtung anhand eines Ausführungsbeispieles nach der Zeichnung näher erläutert. Dabei zeigen in prinzipieller und nicht maßstäblicher Darstellung die
- Figur 1: in teilgeschnittener Ausführung eine Ansicht auf den Filter-hohlzylinder als Ganzes;
- Figur 2: in Vergrößerung einen in Figur 1 mit X bezeichneten Ausschnittskreis; und
- Figur 3: einen Teilausschnitt auf den Filterzylinder nach der Figur 1 von oben her gesehen, wie er sich bei Entfernen des oberen Endkappenrings ergibt.

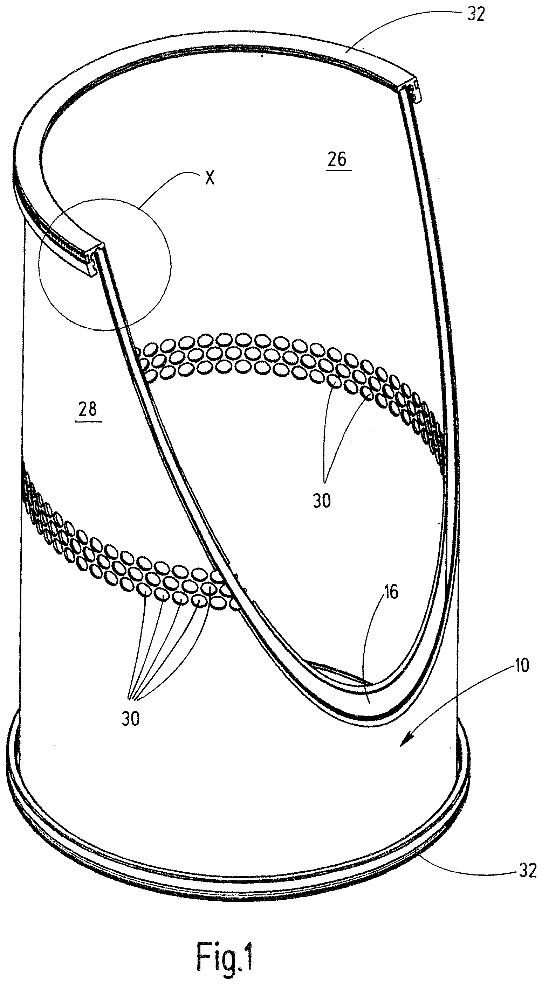

Figur 1 zeigt die Filtervorrichtung als Ganzes in Form eines Filterhohlzylinders 10. Derartige Hohlzylinder 10, die auch im Rahmen eines Stapelverbundes (nicht dargestellt) aus mehreren übereinander angeordneten Filtereinsätzen bestehen können, sind regelmäßig zur tauschbaren Aufnahme in Filtergehäusen vorgesehen, wie das beispielhaft in der der DE 10 2017 001 968 A1 aufgezeigt ist. Derartige Filter-Hohlzylinder 10 werden regelmäßig von innen nach außen von einem Fluidstrom passiert, dessen Partikelverschmutzung sich auf der Innenseite eines Filtermaterials 12 ablagert. Eine auf der Innenseite des Hohlzylinders 10 mittig angeordnete Rückspüleinrichtung (nicht dargestellt) weist einzelne mittels eines drehbar angeordneten Spülarmes entlang der Innenseite des Hohlzylinders 10 umlaufende düsenartige Abreinigungseinheiten auf, die auf der Außenseite des Hohlzylinders 10 mit dem Filtratdruck beaufschlagt eine Rückspülung des Filtermaterials 12 von außen nach innen ermöglichen und die abgereinigten Partikel werden über die jeweilige Abreinigungseinheit und den Spülarm aus dem Gesamtfilter über einen korrespondierenden Ausgang im Filtergehäuse als Rückspülfluid abgeführt.

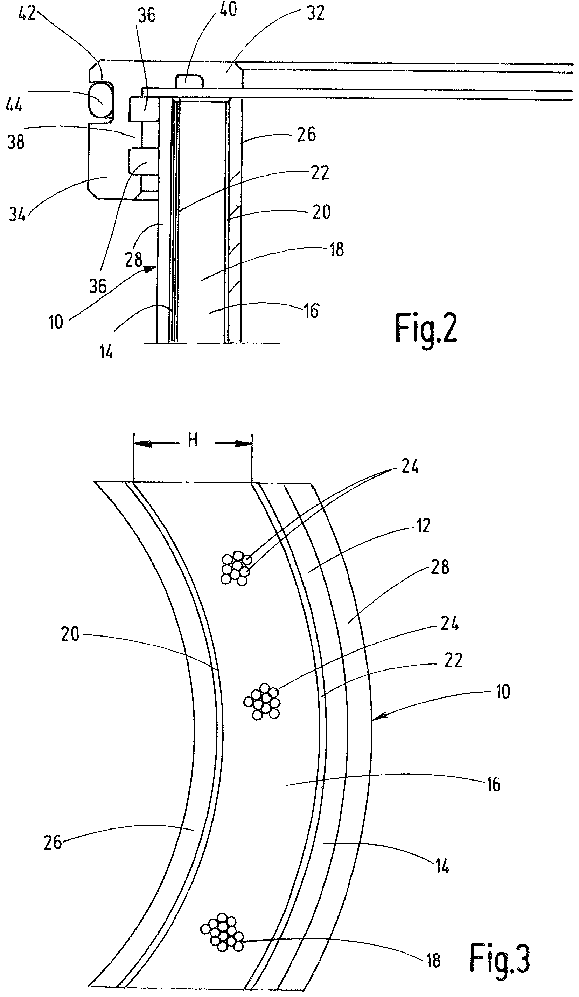

Wie insbesondere die Figuren 2 und 3 zeigen, weist das Filtermaterial 12 des Hohlzylinders 10 einen Oberflächenfilter 14 auf, dem in Strömungsrichtung des von partikulärer Verschmutzung abzureinigenden Fluidstroms von innen nach außen ein Vorfilter 16 vorgeschaltet ist. Der dahingehende Vorfilter 16 weist ein Schüttgut 18 auf, das zur Vergrößerung der wirksamen Oberfläche des Filtermaterials 12 dient und das zwischen zwei Begrenzungslagen 20, 22 aufgenommen ist, die jeweils mit Fluiddurchlässen vorgebbarer Größe versehen sind, deren Öffnungsweite aber jedenfalls kleiner ist als der Durchmesser eines einzelnen Kornes 24 des Schüttgutes 18, um dergestalt ein ungewolltes Ausschwemmen des körnigen Schüttguts 18 aus dem Filter zu verhindern. Die Angabe Filtermaterial 12 ist dabei der Oberbegriff für alle eingesetzten Filterkomponenten, wie dem Oberflächenfilter 14 oder dem Schüttgut 18.

Das Schüttgut 18 zur Vergrößerung der Oberfläche des Filtermateriales 12 vor dem Oberflächenfilter 14 kann aus anorganischen, metallischen oder organischen Materialien natürlichen oder synthetischen Ursprungs bestehen. Dabei können auch recycelte Materialien Einsatz finden, wie beispielsweise Glasscherben aus Altglas. Fernen können als Schüttung für das Schüttgut 18 auch Mischungen der vorstehenden genannten Materialien bedarfsweise zum Einsatz kommen, sowie sogenannte Kompositmaterialien, die mindestens zwei der vorstehend genannten Materialien in jeweils einem Korn 24 vereinigen. Des Weiteren kann eine Oberflächenmodifizierung in Frage kommen, bei der beispielsweise das jeweilige Korn 24 hydrophobiert wird.

Als Schüttung kommen im Hinblick auf die Schaffung einer möglichst großen Oberfläche einzelne Körner 24 auch in Kugelform zum Einsatz, wobei die typischen Korngrößen zwischen 0,1 und 2 mm liegen. Die in Figur 3 mit H bezeichnete Schütthöhe zwischen den beiden Begrenzungslagen 20 und 22 beträgt 5 bis 50 mm, vorzugsweise 10 bis 30 mm. Die jeweilige Schüttung, beispielsweise bestehend aus Sand, Silikaten, Metallen, Glasscherben oder -kugeln, Aktivkohle(n), Kunststoffen etc. wird am einfachsten in Blickrichtung auf die Figuren 1 und 2 gesehen von oben her zwischen die beiden Begrenzungslagen 20 und 22 eingefüllt, wobei eine Verdichtung des Schüttgutes 18 nicht notwendig ist. Vielmehr kann bedarfsweise eine gleichmäßige Verteilung über Rüttelvorgänge am Filter-Hohlzylinder 10 bewirkt werden.

Der Oberflächenfilter 14 kann für sein Filtermaterial 12 mit Oberflächenfiltereigenschaften gleichfalls aus unterschiedlichsten Materialien (anorganisch/keramisch, organisch oder metallisch) aufgebaut sein und besteht vorzugsweise aus einem Gewebe oder Vlies, das wiederum aus Edelstahl- oder Kunststoffmaterialien aufgebaut ist. Die Filterfeinheit des Oberflächenfiltermaterials ist vorzugsweise geringer als die durchschnittliche geometrische Pore der Schüttung betreffend das Schüttgut 18 und die Filterfeinheit des gesamten Hohlzylinders 10 respektive der Filtervorrichtung ist letztlich durch die geometrischen Poren des Feinfiltergewebes 12 bzw. 14 bestimmt. So können bevorzugt für den Oberflächenfilter 14 Edelstahlfeingewebe unterschiedlichster Bindungen zum Einsatz kommen, beispielsweise in Quadratmaschen- oder Tressenausführungen, typischerweise mit geometrischen Poren im Bereich von 10 bis 50 *µ*m. Insoweit kann das Oberflächenmaterial selbst eine Begrenzungslage für das Schüttgut 18 bilden, und insofern könnte dann die Begrenzungslage 22 als eigenständiges Bauteil innerhalb des Filterschichtenverbundes entfallen.

Die beiden Gewebe zum Begrenzen der Schüttung in Form der inneren Begrenzungslage 20 und der äußeren Begrenzungslage 22 sind jedenfalls mit einer Porenweite versehen, die kleiner als das Korn 24 der Schüttung ist und liegt typischerweise im Bereich zwischen 50 und 200 *µ*m. Die Gewebe können aus Drahtmaterialien auch in Kunststoffbauweise mit unterschiedlichsten Bindungen aufgebaut sein.

Des Weiteren weist der Filterlagenverbund für den Hohlzylinder 10 einen inneren Stützkörper 26 sowie einen äußeren Stützkörper 28 auf. Die dahingehenden Stützköper 26 und 28 dienen dem Stabilisieren des Filterkörpers als Ganzem gegen Kollapsdruck und im vorliegenden Fall kommt dahingehend ein perforiertes Blech mit kreisrunden Fluiddurchlässen 30 zum Einsatz, von denen in der Figur 1 der Einfachheit halber nur ein Ausschnitt mit den dahingehenden Fluiddurchlässen 30 gezeigt ist, die sich im Normalfall aber über die gesamte Höhe des Hohlzylinders 10 umfangsseitig erstrecken. Anstelle des gezeigten perforierten Bleches können die Stützkörper 26 und 28 auch aus einem Spaltsieb oder Drahtgitter aufgebaut sein, wobei ein nicht näher dargestellter, umlaufender, spiralförmig angeordneter Draht die Gitteranordnung in Position halten kann und vorzugsweise diese weiter aussteift.

Wie insbesondere die Figur 1 zeigt, ist zur Vervollständigung des Hohlzylinders 10 das angesprochene Filtermaterial 12 an seinen freien Stirnseiten jeweils von einer ringförmigen Endkappe 32 eingefasst, wobei in der Figur 2 der obere Endkappenring 32 näher dargestellt ist. Der Endkappenring 32 übergreift dabei mit einem Vorsprung 34 den oberen Endbereich aller Einzellagen des Filterzylinders 10 und weist auf seiner, dem äußeren Stützkörper 28 zugewandten Seite zwei umlaufende Nuten 36 auf, die durch einen Mittensteg 38 voneinander separiert sind. Des Weiteren weist der Ring 32 auf seiner, der Stirnseite der Filterlagen zugewandten Innenseite, eine weitere umlaufende Innennut 40 auf. Die dahingehenden Nuten 36 und 40 können der Aufnahme eines nicht näher dargestellten Klebstoffes dienen, der ausgehärtet in der Art eines Klebstoffbettes die ringförmige Endkappe 32 mit den sonstigen Lagen des Filter-Hohlzylinders 10 fest verbindet und insbesondere sicherstellt, dass die Schüttung respektive das Schüttgut 18 an den freien Enden des dahingehenden Schüttgutbettes zwischen den Begrenzungslagen 20 und 22 nach außen hin in Position bleibt. Auf der Innenumfangsseite schließt der Ring 32 bündig mit der Innenumfangsseite des inneren Stützkörpers 26 ab und auf der gegenüberliegenden Seite ist in einer Ringnut 42 des Ringes 32 ein O-Dichtring 44 aufgenommen, der der späteren Abdichtung des Hohlzylinders 10 bei Aufnahme in einem zugeordneten Filtergehäuse eines Gesamt-Filters dient.

Für den Einsatz des Hohlzylinders 10 in Rückspülfiltern der genannten Art sind unter Umständen Modifikationen an der Spüleinrichtung notwendig. Beispielsweise müssen die Spülspaltdimensionen an die spezielle Zylinderausgestaltung angepasst werden. Ferner können Anpassungen an der Prozessführung im Rahmen der Rückspülungen notwendig werden, beispielsweise was das Anpassen der Drehgeschwindigkeit der Rückspüleinrichtung anbelangt. Fachsprachlich wird der vorstehend beschriebene Filter-Hohlzylinder 10 auch als sogenannter Filterkorb bezeichnet, obwohl er an und für sich keinen Korbboden aufweist. In Weiterausgestaltung des Filter-Hohlzylinders 10 besteht aber durchaus auch die Möglichkeit für spezielle Anwendungen den dahingehenden Siebzylinder mit einem fluiddichten Abschlussboden (nicht dargestellt) auszustatten. Der dahingehende Korbboden bildet dann bevorzugt die eine Endkappe für den gesamten Filterzylinder 10 aus.

## Patentansprüche

1. Filtervorrichtung, in Form eines ein Filtermaterial (12) aufweisenden Hohlzylinders (10), wobei einem Oberflächenfilter (14) in Strömungsrichtung eines von partikulärer Verschmutzung abzureinigenden Fluidstroms ein Vorfilter (16) vorgeschaltet ist, der zur Vergrößerung der wirksamen Oberfläche des Filtermaterials (12) ein Schüttgut (18) aufweist, das zwischen Begrenzungslagen (20, 22) aufgenommen ist, die jeweils mit Fluiddurchlässen versehen sind, deren Öffnungsweite kleiner ist als der Durchmesser eines einzelnen Kornes (24) des Schüttguts (18), wobei die beiden Begrenzungslagen (20, 22) eine dünne Zylinderwand des Hohlzylinders (10) ausbilden, deren Breite 1 bis 10% des freien Durchmessers des Hohlzylinders (10) beträgt und in der alle aktiven Filtermedien zusammengefasst sind,
**dadurch gekennzeichnet, dass** zur Vervollständigung des Hohlzylinders (10) das angesprochene Filtermaterial (12) an seinen freien Stirnseiten jeweils von einer ringförmigen Endkappe (32) eingefasst ist, die mit einem Vorsprung (34) den oberen Endbereich aller Einzellagen des Filterzylinders (10) übergreift und auf ihrer einem äußeren Stützkörper (28) des Hohlzylinders (10) zugewandten Seite zwei umlaufende Nuten (36) aufweist, die durch einen Mittensteg (38) voneinander separiert sind, und
dass auf der Innenumfangsseite die jeweilige ringförmige Endkappe (32) bündig mit der Innenumfangsseite des inneren Stützkörpers (26) des Hohlzylinders (10) abschließt und auf der gegenüberliegenden Seite in einer Ringnut (42) der ringförmigen Endkappe (32) ein O-Dichtring (44) aufgenommen ist.

2. Filtervorrichtung nach Anspruch 1, **dadurch gekennzeichnet, dass** die beiden Begrenzungslagen (20, 22) eine dünne Zylinderwand des Hohlzylinders (10) ausbilden, deren Breite 2 bis 6%, besonders bevorzugt 2,5% des freien Durchmessers des Hohlzylinders (10) beträgt.

3. Filtervorrichtung nach Anspruch 1 oder 2, **dadurch gekennzeichnet, dass** das Schüttgut (18) aus anorganischen, metallischen oder organischen Materialien natürlichen oder synthetischen Ursprungs besteht mit einer bevorzugten Korngröße für das einzelne Korn zwischen 0,1 mm bis 2 mm.

4. Filtervorrichtung nach einem der vorhergehenden Ansprüche, **dadurch gekennzeichnet, dass** die Schütthöhe (H) des Schüttguts (18) zwischen den beiden Begrenzungslagen (20, 22) zwischen 5 bis 50 mm, vorzugsweise zwischen 10 bis 30 mm, liegt.

5. Filtervorrichtung nach einem der vorhergehenden Ansprüche, **dadurch gekennzeichnet, dass** das Schüttgut (18) hydrophobiert ist und/ oder hydrophobierte Materialien aufweist.

6. Filtervorrichtung nach einem der vorhergehenden Ansprüche, **dadurch gekennzeichnet, dass** das Schüttgut (18) aus Sand, Silikaten, Metallen, Glas, Aktivkohle(n) und/oder Kunststoffen in Kornform besteht.

7. Filtervorrichtung nach einem der vorhergehenden Ansprüche, **dadurch gekennzeichnet, dass** die Begrenzungslagen (20, 22) und/oder der Oberflächenfilter (14) aus Draht- oder Kunststoffgeweben oder Vliesen gebildet sind.

8. Filtervorrichtung nach einem der vorhergehenden Ansprüche, **dadurch gekennzeichnet, dass** der Oberflächenfilter (14) eine Begrenzungslage (22) für das Schüttgut (18) aufweist oder diese Begrenzungslage selbst bildet.

9. Filtervorrichtung nach einem der vorhergehenden Ansprüche, **dadurch gekennzeichnet, dass** der Hohlzylinder (10) von innen nach außen die folgenden Komponenten aufweist:
- einen inneren Stützkörper (26),
- eine Begrenzungslage (20) zum Begrenzen des Schüttguts (18),
- Schüttgut (18) zur Vergrößerung der Oberfläche des Oberflächenfilters (14),
- optional eine weitere Begrenzungslage (22),
- einen Oberflächenfilter (14),
- ein Stützgewebe zum Stützen des Oberflächenfilters,
- einen äußeren Stützkörper (28).

10. Filtervorrichtung nach einem der vorhergehenden Ansprüche, **dadurch gekennzeichnet, dass** die jeweils eingesetzten Komponenten sich konzentrisch zu der Längsachse des Hohlzylinders (10) erstrecken.

11. Filtervorrichtung nach einem der vorhergehenden Ansprüche, **dadurch gekennzeichnet, dass** die Zylinderwand mit ihren jeweiligen Komponenten an ihren freien Stirnseiten von jeweils dem Endkappenring (32) eingefasst ist, der randseitig über die Zylinderwand des Hohlzylinders (10) übersteht.

12. Filtervorrichtung nach einem der vorhergehenden Ansprüche, **dadurch gekennzeichnet, dass** der innere und/oder der äußere Stützkörper (26, 28) aus einem perforierten Blech, einem Spaltsieb oder einem Drahtgitter gebildet sind.

13. Filtervorrichtung nach einem der vorhergehenden Ansprüche, **dadurch gekennzeichnet, dass** der äußere Stützkörper (28) eine nach außen zur Umgebung hin vorstehenden, umlaufenden, spiralförmigen Draht aufweist.

## Claims

1. Filter apparatus, in the form of a hollow cylinder (10) having a filter material (12), a pre-filter (16) being connected upstream of a surface filter (14) in the flow direction of a fluid flow to be cleaned of particulate contamination, said pre-filter comprising a bulk material (18) for increasing the effective surface area of the filter material (12), said bulk material being received between confining layers (20, 22), each of which is provided with fluid passages, the opening width of which is smaller than the diameter of a single grain (24) of the bulk material (18),
the two confining layers (20, 22) forming a thin cylinder wall of the hollow cylinder (10), the width of said wall being 1 to 10% of the free diameter of the hollow cylinder (10) and in which all active filter media are contained,
**characterised**
**in that**
to complete the hollow cylinder (10), the aforementioned filter material (12) is in each case enclosed on its free end faces by an annular end cap (32), which extends over the upper end region of all individual layers of the filter cylinder (10) with a protrusion (34) and has two circumferential grooves (36) on its side facing an outer supporting body (28) of the hollow cylinder (10), said grooves being separated from one another by a central web (38),
and
that, on its inner circumference, the respective annular end cap (32) ends flush with the inner circumference of the inner supporting body (26) of the hollow cylinder (10) and an O-ring seal (44) is received on the opposite side in an annular groove (42) of the annular end cap (32).

2. Filter apparatus according to claim 1, **characterised in that** the two confining layers (20, 22) form a thin cylinder wall of the hollow cylinder (10), the width of which is 2 to 6%, more preferably 2.5% of the free diameter of the hollow cylinder (10).

3. Filter apparatus according to either claim 1 or claim 2, **characterised in that** the bulk material (18) consists of inorganic, metallic or organic materials of natural or synthetic origin with a preferred grain size for the single grain of between 0.1 mm and 2 mm.

4. Filter apparatus according to any of the preceding claims, **characterised in that** the fill height (H) of the bulk material (18) between the two confining layers (20, 22) is between 5 and 50 mm, preferably between 10 and 30 mm.

5. Filter apparatus according to any of the preceding claims, **characterised in that** the bulk material (18) is made water-repellent and/or comprises water-repellent materials.

6. Filter apparatus according to any of the preceding claims, **characterised in that** the bulk material (18) consists of sand, silicates, metals, glass, activated charcoal(s) and/or plastics in granular form.

7. Filter apparatus according to any of the preceding claims, **characterised in that** the confining layers (20, 22) and/or the surface filter (14) are formed of wire or plastic meshes or nonwovens.

8. Filter apparatus according to any of the preceding claims, **characterised in that** the surface filter (14) has a confining layer (22) for the bulk material (18) or forms this boundary layer itself.

9. Filter apparatus according to any of the preceding claims, **characterised in that** the hollow cylinder (10) comprises the following components from inside to outside:
- an inner supporting body (26),
- a confining layer (20) for confining the bulk material (18),
- bulk material (18) for increasing the surface area of the surface filter (14),
- an optional further confining layer (22),
- a surface filter (14),
- a support fabric for supporting the surface filter,
- an outer supporting body (28).

10. Filter apparatus according to any of the preceding claims, **characterised in that** the components used in each case extend concentrically in relation to the longitudinal axis of the hollow cylinder (10).

11. Filter apparatus according to any of the preceding claims, **characterised in that** the cylinder wall with its respective components is enclosed on its free end faces by an end cap ring (32) in each case, which protrudes beyond the cylinder wall of the hollow cylinder (10) at the edge.

12. Filter apparatus according to any of the preceding claims, **characterised in that** the inner and/or the outer supporting bodies (26, 28) are formed of a perforated sheet, a wedge wire screen or a wire mesh.

13. Filter apparatus according to any of the preceding claims, **characterised in that** the outer supporting body (28) has a circumferential, spiral-shaped wire protruding outwards towards the environment.

## Revendications

1. Appareil de filtration, sous la forme d'un cylindre (10) creux comportant une matière (12) filtrante, dans lequel en amont dans le sens d'écoulement d'un courant de fluide, à épurer de pollution en particules, d'un filtre (14) de surface est monté un préfiltre (16), qui, pour agrandir la surface efficace de la matière (12) filtrante, a un produit (18) en vrac, qui est reçu entre des couches (20, 22) de démarcation, qui sont pourvues chacune de passage pour du fluide, dont la largeur d'ouverture est plus petite que le diamètre d'un grain (24) individuel du produit (18) en vrac,
dans lequel les deux couches (20, 22) de démarcation constituent une paroi mince du cylindre (10) creux, dont la largeur représente de 1 à 10 % du diamètre libre du cylindre (10) creux, et
dans laquelle les milieux filtrants actifs sont rassemblés,
**caractérisé**
**en ce que**
pour compléter le cylindre (10) creux, ladite matière (12) filtrante est bordée sur ses côtés frontaux libres respectivement par une coiffe (32) d'extrémité de forme annulaire, qui, par une saillie (34) prend la partie d'extrémité supérieure de toutes les couches individuelles du cylindre (10) de filtre et a, sur son côté tourné vers un corps (28) extérieur d'appui du cylindre (10) creux, deux rainures (36) faisant le tour, qui sont séparées l'une de l'autre par une partie pleine (38) médiane, et
**en ce que** sur la face de contour intérieure, la coiffe (32) d'extrémité de forme annulaire est au ras de la face périphérique intérieure du corps (26) intérieur d'appui du cylindre (10) creux, et
sur la face opposée, un joint (44) d'étanchéité torique est reçu dans une rainure (42) annulaire de la coiffe (32) d'extrémité de forme annulaire.

2. Appareil de filtration suivant la revendication 1, **caractérisé en ce que** les deux couches (20, 22) de démarcation constituent une paroi mince du cylindre (10) creux, dont la largeur représente de 2 à 6 %, de préférence, en particulier 2,5 %, du diamètre libre du cylindre (10) creux.

3. Appareil de filtration suivant la revendication 1 ou 2, **caractérisé en ce que** le produit (18) en vrac est en une matière minérale, métallique ou en une matière organique d'origine naturelle ou synthétique ayant une granulométrie préférée du grain individuel comprise entre 0,1 mm jusqu'à 2 mm.

4. Appareil de filtration suivant l'une des revendications précédentes, **caractérisé en ce que** la hauteur (H) du produit (18) en vrac entre les deux couches (20, 22) de démarcation est comprise entre 5 et 50 mm, de préférence entre 10 et 30 mm.

5. Appareil de filtration suivant l'une des revendications précédentes, **caractérisé en ce que** le produit (18) en vrac est rendu hydrophobe et/ou a des matériaux rendus hydrophobes.

6. Appareil de filtration suivant l'une des revendications précédentes, **caractérisé en ce que** le produit (18) en vrac est en sable, silicates, métaux, verre, charbon(s) actif(s) et/ou matières plastiques sous forme granulaire.

7. Appareil de filtration suivant l'une des revendications précédentes, **caractérisé en ce que** les couches (20, 22) de démarcation et/ou le filtre (14) de surface sont formés de tissus métalliques ou en matière plastique ou de non-tissés.

8. Appareil de filtration suivant l'une des revendications précédentes, **caractérisé en ce que** le filtre (14) de surface a une couche (22) de démarcation du produit (18) en vrac ou forme soi-même cette couche de démarcation.

9. Appareil de filtration suivant l'une des revendications précédentes, **caractérisé en ce que** le cylindre (10) creux a, de l'intérieur à l'extérieur, les composants suivants :
- un corps (26) intérieur d'appui,
- une couche (20) de démarcation pour la démarcation du produit (18) en vrac,
- du produit (18) en vrac pour l'agrandissement de la surface du filtre (14) de surface,
- éventuellement une autre couche (22) de démarcation,
- un filtre (14) de surface,
- un tissu d'appui pour l'appui du filtre de surface,
- un corps (28) extérieur d'appui.

10. Appareil de filtration suivant l'une des revendications précédentes, **caractérisé en ce que** les composants utilisés respectivement s'étendent concentriquement à l'axe longitudinal du cylindre (10) creux.

11. Appareil de filtration suivant l'une des revendications précédentes, **caractérisé en ce que** la paroi du cylindre est, avec ses composants respectifs, bordée sur ses extrémités frontales libres par respectivement la bague (32) de coiffe d'extrémité, qui dépasse du côté du bord de la paroi du cylindre (10) creux.

12. Appareil de filtration suivant l'une des revendications précédentes, **caractérisé en ce que** le corps (26) intérieur d'appui et/ou le corps (28) extérieur d'appui sont formés d'une tôle perforée, d'un tamis à fentes ou d'un grillage de fils métalliques.

13. Appareil de filtration suivant l'une des revendications précédentes, **caractérisé en ce que** le corps (28) extérieur d'appui a un film en forme de spirale, faisant le tour, en saillie vers l'extérieur.
